(19) Europäisches Patentamt
European Patent Office
Office européen des brevets

(11) Veröffentlichungsnummer : **0 446 171 A2**

# (12) EUROPÄISCHE PATENTANMELDUNG

(21) Anmeldenummer : **91810130.4**

(22) Anmeldetag : **27.02.91**

(51) Int. Cl.⁵ : **C08K 13/00**, C08L 57/08, // (C08K13/00, 3:00, 5:3435, 5:07, 5:57), (C08K13/00, 5:3435, 5:07, 5:57, 5:09)

(30) Priorität : **08.03.90 CH 760/90**

(43) Veröffentlichungstag der Anmeldung : **11.09.91 Patentblatt 91/37**

(84) Benannte Vertragsstaaten : **BE DE ES FR GB IT**

(71) Anmelder : **CIBA-GEIGY AG**
**Klybeckstrasse 141**
**CH-4002 Basel (CH)**

(72) Erfinder : **Sander, Hans Jürgen**
**Magnolienstrasse 25**
**W-6143 Lorsch (DE)**
Erfinder : **Abeler, Gerd, Dr.**
**Alter Wixhäuser Weg 61**
**W-6100 Darmstadt (DE)**
Erfinder : **Wirth, Hermannn O., Dr.**
**Lessingstrasse 24**
**W-6140 Bensheim 3 (DE)**

## (54) Stabilisierte chlorhaltige Polymerzusammensetzungen.

(57) Chlorhaltige Polymere werden stabilisiert durch Zusatz eines Stabilisatorgemisches, enthaltend :
a) mindestens ein sterisch gehindertes Amin,
b) mindestens eine organische oder anorganische Zinkverbindung,
c) mindestens eine Organozinnverbindung der Formeln A bis D und
d) mindestens eine 1,3-Dicarbonylverbindung der Formel E.

Beispielsweise können solche Polymerzusammensetzungen für Hohlkörper und als Verpackungsfolien eingesetzt werden.

EP 0 446 171 A2

# STABILISIERTE CHLORHALTIGE POLYMERZUSAMMENSETZUNGEN

Die Erfindung betrifft stabilisierte chlorhaltige Polymerzusammensetzungen enthaltend ein sterisch gehindertes Amin in Kombination mit einer Zinkverbindung, einem Organozinncarboxylat und einer 1,3-Dicarbonylverbindung.

Aus der JP-A-86/163 965 sind hitzestabilisierte halogenhaltige Kunststoffzusammensetzungen bekannt, enthaltend 2,2,6,6-tetra-substituierte Piperidine. Als weitere Stabilisatoren sind die Zn-, Alkali- und Erdalkalisalze organischer Säuren genannt.

In der EP-A-237 485 ist die Stabilisierung von Hart-PVC mit 2,2,6,6-Tetraalkylpiperidinen und Organozinncarboxylaten beschrieben. Diese Zusammensetzungen enthalten keine Zinkverbindungen.

Aus der JP-A-84/86647 sind stabilisierte chlorhaltige Kunststoffzusammensetzungen bekannt, enthaltend Metallsalze, inklusive Zinksalze, und cyclische 1,3-Diketone der allgemeinen Formel

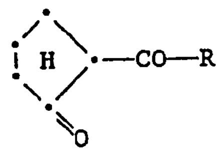 ,

wobei R z.B. Alkyl, Alkenyl, Aryl, Aralkyl, Cycloalkyl usw. bedeuten kann. Als Costabilisatoren werden Epoxidverbindungen verwendet.

Die bekannten Stabilisatoren und Stabilisatorgemische können in den Polymeren nicht allen gestellten Anforderungen, insbesondere in Bezug auf die Anfangsfarbe, Farbhaltung und Langzeitstabilität, entsprechen.

Es wurde nun gefunden, dass die chlorhaltigen Polymerzusammensetzungen, stabilisiert nach vorliegender Erfindung, weiter verbesserte Eigenschaften bezüglich der Thermo- und Lichtstabilität aufweisen.

Erfindungsgemäss wird das mit einer Polymerzusammensetzung erreicht, enthaltend ein chlorhaltiges Polymer und ein Stabilisatorgemisch, enthaltend:

a) mindestens ein sterisch gehindertes Amin,

b) mindestens eine organische oder anorganische Zinkverbindung,

c) mindestens eine Organozinnverbindung der Formeln A, B, C oder/und D,

$(Z)_mSn(OOC\text{-}Z_1)_{4\text{-}m}$ A

$(Z)_mSn(OOC\text{-}CH{=}CH)COOZ_1)_{4\text{-}m}$ B

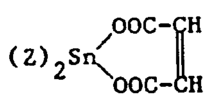 C

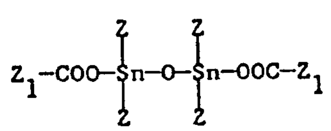 D

worin m 1, 2 oder 3 bedeutet, Z $C_1$-$C_{20}$-Alkyl bedeutet, $Z_1$ Wasserstoff, $C_1$-$C_{20}$-Alkyl, $C_3$-$C_{20}$-Alkenyl, $C_5$-$C_8$-Cycloalkyl, Phenyl, $C_7$-$C_{18}$-Alkylphenyl oder $C_7$-$C_9$-Phenylalkyl bedeutet, und

d) mindestens eine 1,3-Dicarbonylverbindung der Formel E

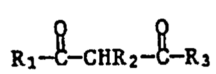 E

worin $R_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe $—R_5—S—R_6$ oder $-R_5\text{-}O\text{-}R_6$ bedeutet, $R_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Grupe $—CO—R_4$ bedeutet, $R_3$ eine der für $R_1$ gegebenen Bedeutungen hat oder $C_1$-$C_{18}$-Alkoxy bedeutet,

$R_4$ $C_1$-$C_4$-Alkyl oder Phenyl bedeutet,
$R_5$ $C_1$-$C_{10}$-Alkylen bedeutet und
$R_6$ $C_1$-$C_{12}$-Alkyl, Phenyl, $C_7$-$C_{18}$-Alkylphenyl oder $C_7$-$C_{10}$-Phenylalkyl bedeutet.

Das chlorhaltige Polymer kann z.B. ein Homo- oder Copolymer des Vinylchlorids oder des Vinylidenchlorids sein oder ein nachchloriertes Polymer bzw. Copolymer des Vinylchlorids oder des Vinylidenchlorids, ein chloriertes Polyolefin, wie z.B. ein chloriertes Polyethylen, ein chloriertes Polymer bzw. Copolymer des Styrols oder des Butadiens oder ein chlorierter Kautschuk oder ein Kautschuk-Hydrochlorid, sowie eine Mischung eines solchen chlorhaltigen Polymers mit einem anderen chlorhaltigen oder chlorfreien Polymeren. Bevorzugt ist das chlorhaltige Polymer ein Polyvinylchlorid oder ein mindestens 80 % Vinylchlorid enthaltendes Copolymer oder eine Mischung (Polyblend) eines solchen Polymers mit anderen chlorhaltigen oder chlorfreien Polymeren. Das Polyvinylchlorid kann ein Emulsions-, Suspensions- oder Massepolymerisat sein.

Das sterisch gehinderte Amin ist vorzugsweise ein Polyalkylpiperidinderivat und enthält vorzugsweise mindestens eine Gruppe der Formel I

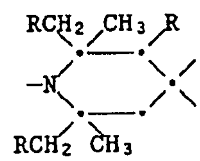

I

worin R Wasserstoff oder Methyl ist, und ist insbesondere ein Derivat des 2,2,6,6-Tetramethylpiperidins der Formel I, worin R Wasserstoff ist. In 4-Stellung des Piperidinrings sind diese Verbindungen vorzugsweise mit einem oder zwei polaren Gruppen oder einem Spiro-Ringsystem substituiert. Es kann sich bei diesen Verbindungen um niedermolekulare oder oligomere oder polymere Verbindungen handeln.

Von Bedeutung sind insbesondere die folgenden Klassen von Polyalkylpiperidinen.

a) Verbindungen der Formel II,

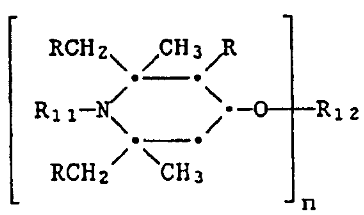

II

worin n eine Zahl von 1 bis 4, vorzugsweise 1 oder 2 bedeutet, R Wasserstoff oder Methyl bedeutet, $R_{11}$ Wasserstoff, Oxyl, Hydroxyl, $C_1$-$C_{12}$-Alkyl, $C_3$-$C_8$ Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe -$CH_2CH(OH)$-Z, worin Z Wasserstoff, Methyl oder Phenyl ist, bedeutet, wobei $R_{11}$ vorzugsweise H, $C_1$-$C_4$-Alkyl, Allyl, Benzyl, Acetyl oder Acryloyl ist und $R_{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $R_{11}$ oder $R_{12}$ z.B. die oben angeführten Gruppen und dazu noch beispielsweise n-Tridecyl, n-Tetradecyl, n-Hexadecyl oder n-Octadecyl darstellen.

Wenn $R_{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R_{11}$ ist als $C_3$-$C_8$-Alkinyl bevorzugt Propargyl.

Als $C_7$-$C_{12}$-Aralkyl ist $R_{11}$ insbesondere Phenethyl und vor allem Benzyl.

$R_{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $R_{11}$ einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.

Bedeutet $R_{12}$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R_{12}$ einen dreiwertigen Rest einer Tricarbonsäure dar, so bedeutet es z.B. einen Trimellitsäure-, Citronensäure- oder Nitrilotriessigsäurerest.

Stellt $R_{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R_{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel II, worin R Wasserstoff ist, $R_{11}$ Wasserstoff oder Methyl ist, n 2 ist und $R_{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethylpiperidin)
27) Toluol-2',4'-bis-(4-carbamoyloxy-1-n-propyl-2,2,6,6-tetramethylpiperidin)
28) Tetra-(2,2,6,6-tetramethylpiperidin-4-yl)-butantetracarboxylat
29) Tetra-(1,2,2,6,6-pentamethylpiperidin-4-yl)-butantetracarboxylat
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin

35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel III,

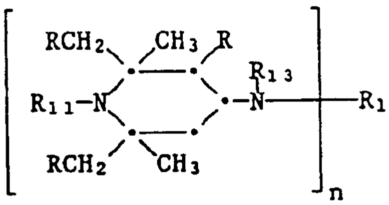

III

worin n die Zahl 1 oder 2 bedeutet, R und $R_{11}$ die unter a) angegebene Bedeutung haben, $R_{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

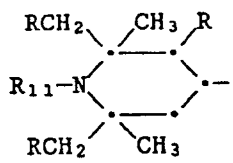

ist und $R_{14}$ wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel —$CH_2$—CH(OH)—Z oder der Formel —CONH—Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine -$CH_2$-CH(OH)-$CH_2$-Gruppe oder eine Gruppe —$CH_2$—CH(OH)—$CH_2$—O—D—O- bedeutet, worin D $C_2$-$C_{10}$-Alkylen, $C_6$—$C_{15}$-Arylen, $C_6$-$C_{12}$-Cycloalkylen ist, oder vorausgesetzt, dass $R_{13}$ nicht Alkanoyl, Alkenoyl oder Benzoyl bedeutet, $R_{14}$ auch einen zweiwertigen Rest einer aliphatischen, cycloaliphatischen oder aromatischen Dicarbonsäure oder Dicarbaminsäure oder auch die Gruppe —CO— bedeuten kann, oder $R_{13}$ und $R_{14}$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R_{13}$ insbesondere Phenylethyl oder vor allem Benzyl. Als $C_2$-$C_5$-Hydroxyalkyl ist $R_{13}$ insbesondere 2-Hydroxyethyl oder 2-Hydroxypropyl.

$R_{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $R_{14}$ $C_2$-$C_8$-Alkenyl, dann handelt es sich z.B. um Allyl, Methallyl, 2-Butenyl, 2-Pentenyl, 2-Hexenyl oder 2-Octenyl.

$R_{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist D insbesondere Cyclohexylen.

Bevorzugt sind Verbindungen der Formel III, worin n 1 oder 2 ist, R Wasserstoff ist, $R_{11}$ Wasserstoff oder Methyl ist, $R_{13}$ Wasserstoff, $C_1$-$C_{12}$-Alkyl oder eine Gruppe der Formel

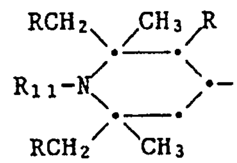

ist und $R_{14}$ im Fall von n=1 Wasserstoff oder $C_1$-$C_{12}$-Alkyl ist, und im Fall von n=2 $C_2$-$C_8$-Alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel

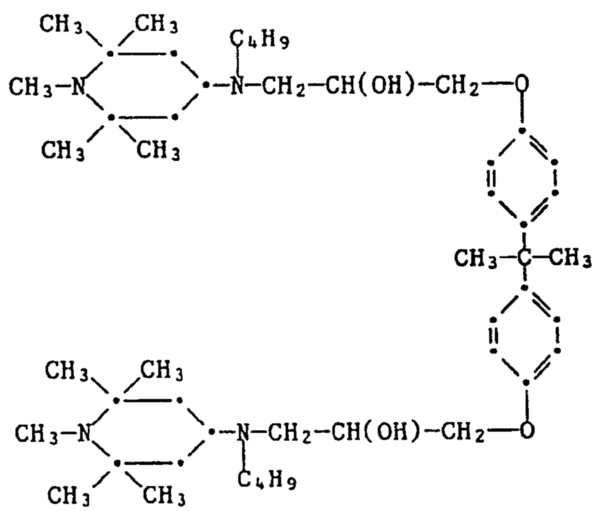

47) 4-(Bis-2-hydroxyethyl-amino)-1,2,2,6,6-pentamethylpiperidin
48)4-(3-Methyl-4-hydroxy-5-tert.-butyl-benzoesäureamido)-2,2,6,6-tetramethylpiperidin
49) 4-Methacrylamido-1,2,2,6,6-pentamethylpiperidin

c) Verbindungen der Formel IV,

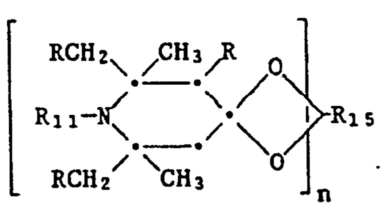

IV

worin n die Zahl 1 oder 2 bedeutet, R und $R_{11}$ die unter a) angegebene Bedeutung haben und $R_{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $R_{15}$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $R_{15}$ z.B. 2-Ethyl-2-acetoxymethylpropylen.
Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro [5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5''-(1'',3''-dioxan) -2''-spiro-4'''-(2''',2''',6''',6'''-tetramethylpiperidin).

d) Verbindungen der Formeln VA, VB und VC

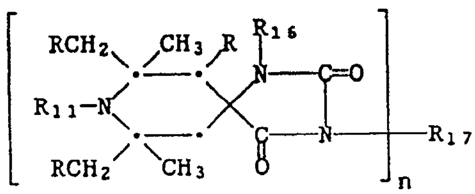

VA

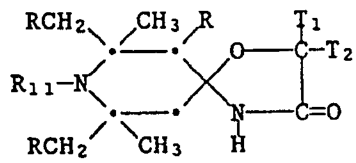

VB

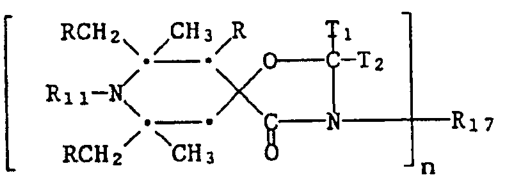

VC

worin n die Zahl 1 oder 2 bedeutet, R und $R_{11}$ die unter a) angegebene Bedeutung haben, $R_{16}$ Wasserstoff, $C_1$-$C_{12}$-Alkyl, Allyl, Benzyl, Glycidyl oder $C_2$-$C_6$-Alkoxyalkyl ist und $R_{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2$-CH(OH)-$CH_2$-O-D-O-$CH_2$-CH(OH)-$CH_2$-, worin D $C_2$-$C_{10}$ Alkylen, $C_6$-$C_{15}$-Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$-Alkyl, Allyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R_{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $R_{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R_{17}$ $C_2$-$C_4$-Hydroxyalkyl, so stellt es z.B. 2-Hydroxyethyl, 2-Hydroxypropyl, 2-Hydroxybutyl oder

4-Hydroxybutyl dar.

Als $C_6$-$C_{10}$-Aryl bedeuten $R_{17}$, $T_1$ und $T_2$ insbesondere Phenyl, α- oder β-Naphthyl, die gegebenenfalls mit Halogen oder $C_1$-$C_4$-Alkyl substituiert sind.

Stellt $R_{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $R_{17}$ insbesondere 2-Butenylen, 2-Pentenylen oder 3-Hexenylen.

Bedeutet $R_{17}$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion

57) 3-n-Octyl-1,3,8-triaza-7,7,9,9-tetramethylspiro[4.5]decan-2,4-dion

58) 3-Allyl-1,3,8-triaza-1,7,7,9,9-pentamethylspiro[4.5]decan-2,4-dion

59) 3-Glycidyl-1,3,8-triaza-7,7,8,9,9-pentamethylspiro[4.5]decan-2,4-dion

60) 1,3,7,7,8,9,9-Heptamethyl-1,3,8-triazaspiro[4.5]decan-2,4-dion

61) 2-Iso-propyl-7,7,9,9-tetramethyl-1-oxa-3,8-diaza-4-oxo-spiro-[4.5]decan

62) 2,2-Dibutyl-7,7,9,9-tetramethyl-1-oxa-3,8-diaza-4-oxo-spiro-[4.5]-decan

63) 2,2,4,4-Tetramethyl-7-oxa-3,20-diaza-21-oxo-dispiro[5.1.11.2]-heneicosan

64) 2-Butyl-7,7,9,9-tetramethyl-1-oxa-4,8-diaza-3-oxo-spiro-[4,5]decan

65) 8-Acetyl-3-dodecyl-1,3,8-triaza-7,7,9,9-tetramethylspiro[4,5]-decan-2,4-dion

oder die Verbindungen der folgenden Formeln:

66)

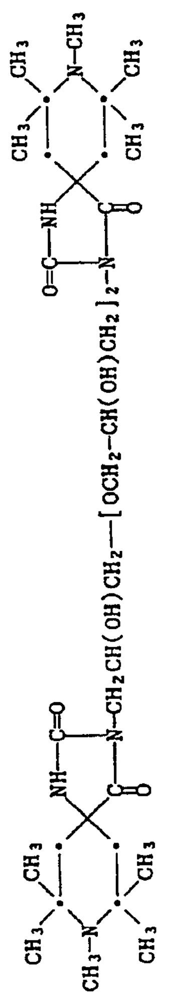

67)

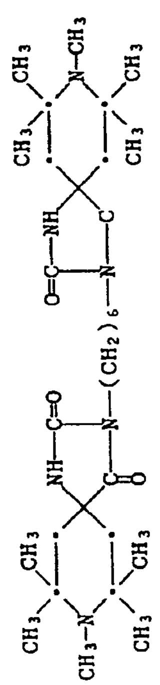

68)

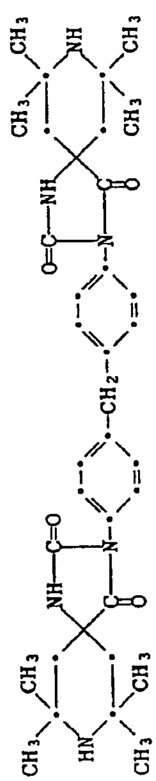

69)

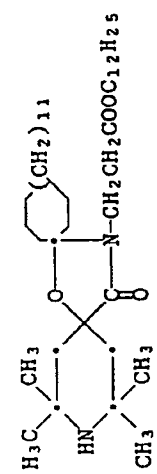

e) Verbindungen der Formel VI,

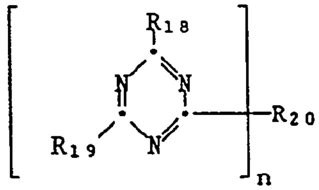

VI

worin n die Zahl 1 oder 2 ist und $R_{18}$ eine Gruppe der Formel

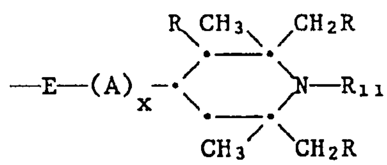

bedeutet, worin R und $R_{11}$ die unter a) angegebene Bedeutung haben, E -O- oder $-NR_{21}-$ ist, A $C_2$-$C_6$-Alkylen oder $-(CH_2)_3$-O- und x die Zahlen 0 oder 1 bedeuten, $R_{19}$ gleich $R_{18}$ oder eine der Gruppen $-NR_{21}R_{22}$, $-OR_{23}$, $-NHCH_2OR_{23}$ oder $-N(CH_2OR_{23})_2$ ist, $R_{20}$, wenn n = 1 ist, gleich $R_{18}$ oder $R_{19}$, und wenn n = 2 ist, eine Gruppe -E-B-E- ist, worin B gegebenenfalls durch $-N(R_{21})-$ unterbrochenes $C_2$-$C_6$-Alkylen bedeutet, $R_{21}$ $C_1$-$C_{12}$-Alkyl, Cyclohexyl, Benzyl oder $C_1$-$C_4$-Hydroxyalkyl oder eine Gruppe der Formel

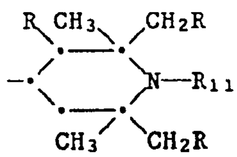

ist, $R_{22}$ $C_1$-$C_{12}$ Alkyl, Cyclohexyl, Benzyl, $C_1$-$C_4$ Hydroxyalkyl und $R_{23}$ Wasserstoff, $C_1$-$C_{12}$ Alkyl oder Phenyl bedeuten oder $R_{21}$ und $R_{22}$ zusammen $C_4$-$C_5$-Alkylen oder -Oxaalkylen, beispielsweise

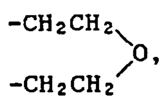 oder eine Gruppe der Formel 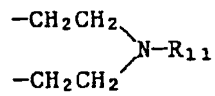

sind oder auch $R_{21}$ und $R_{22}$ jeweils eine Gruppe der Formel

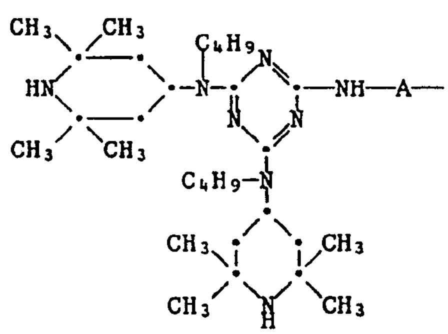

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B 2-Hydroxyethyl, 2-Hydroxypropyl,

3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $R_{21}$ und $R_{22}$ zusammen $C_4$-$C_5$-Alkylen oder -Oxaalkylen dar, so bedeutet dies z.B. Tetramethylen, Pentamethylen oder 3-Oxapentamethylen.

Bevorzugt sind Verbindungen der Formel VI, worin n 4 ist, $R_{18}$ und $R_{19}$ eine Gruppe

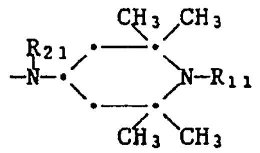

bedeuten, worin $R_{11}$ Wasserstoff oder Methyl ist und $R_{21}$ Wasserstoff oder $C_1$-$C_6$-Alkyl ist, und $R_{20}$ den vierwertigen Rest eines aliphatischen Tetramins bedeutet.

Beispiele für Polyalkylpiperidin-Verbindungen dieser Klasse sind die Verbindungen der folgenden Formeln:

70) 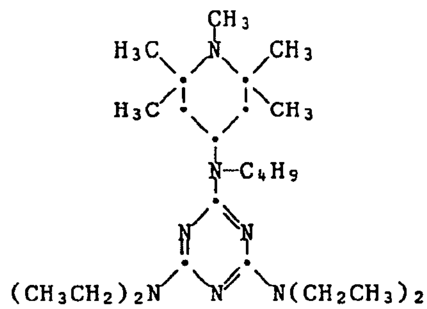

71) 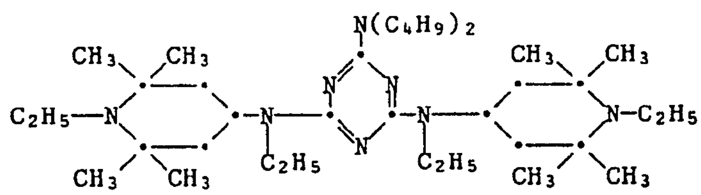

72) 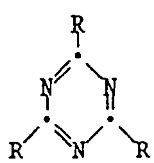 mit R = $-NH-CH_2CH_2CH_2-O-$ 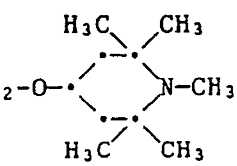

73)

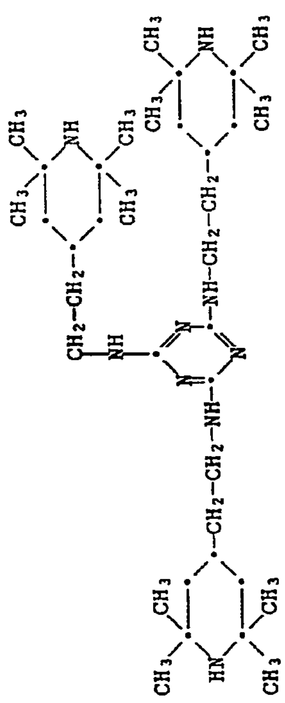

74)

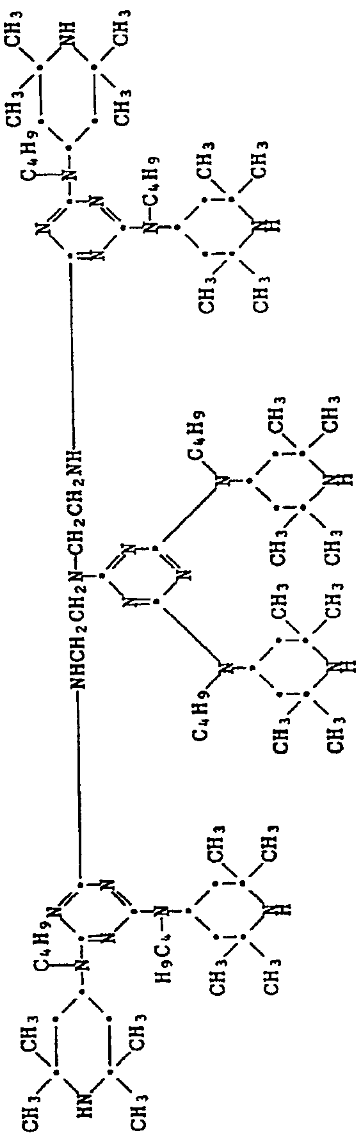

75) 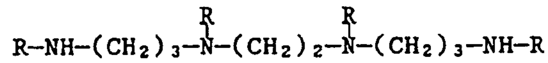

mit R =

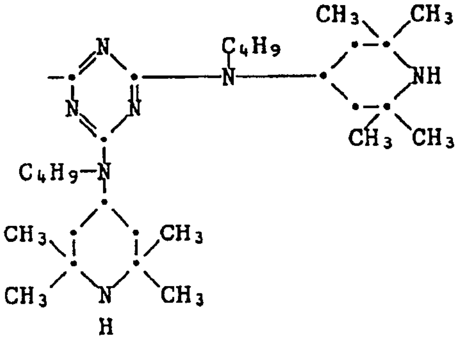

76) 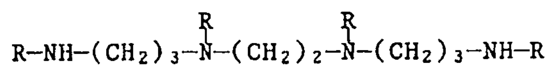

mit R =

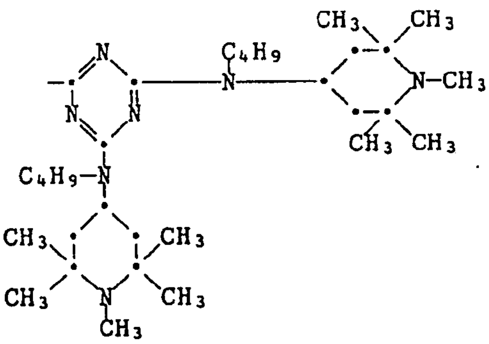

77) 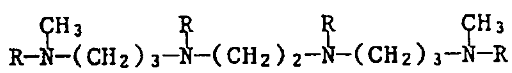

mit R =

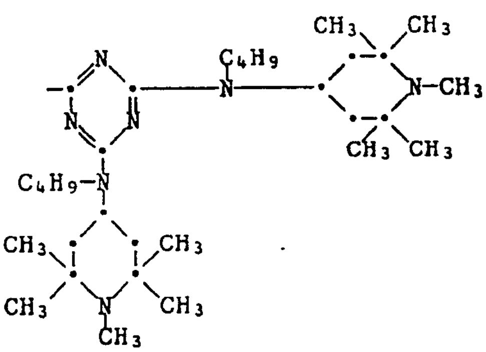

78) 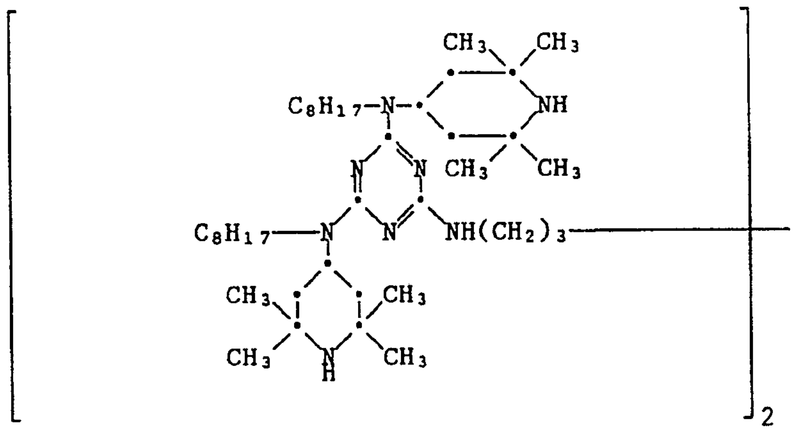

79) 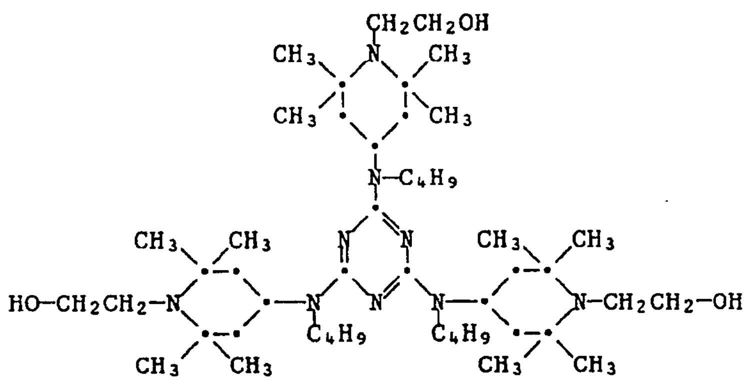

(80) 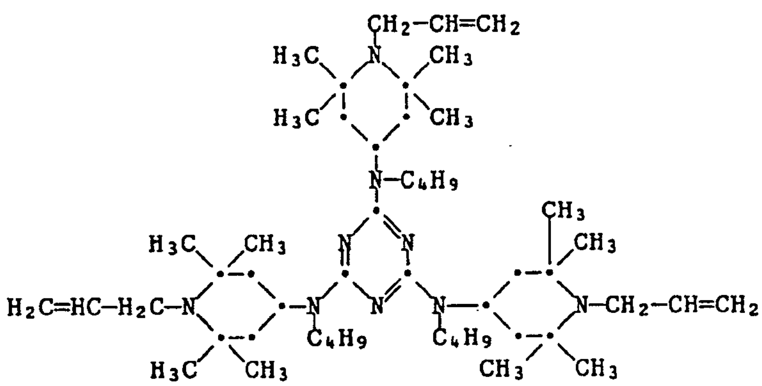

f) Oligomere oder polymere Verbindungen, deren wiederkehrende Struktureinheit einen Polyalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten. Darunter sind die Polyester und Polyaminotriazine bevorzugt.

Beispiele für 2,2,6,6-Polyalkylpiperidin-Lichtschutzmittel dieser Klasse sind die Verbindungen der folgenden Formeln, wobei p eine Zahl von 2 bis etwa 200 bedeutet.

81)

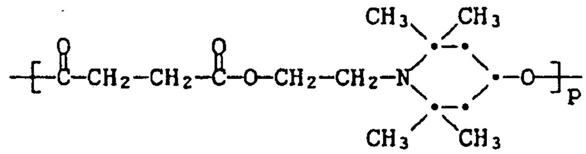

82)

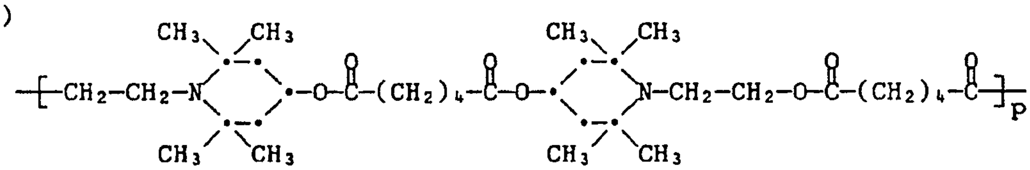

83)

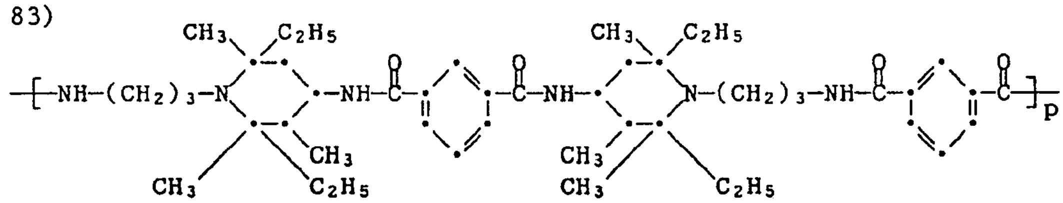

84)

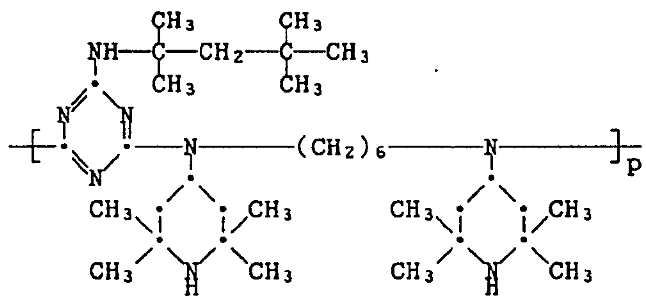

85)

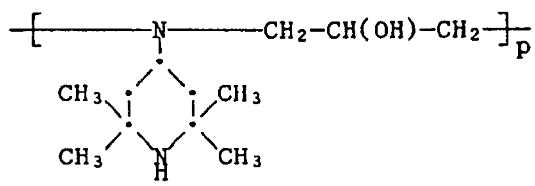

86)

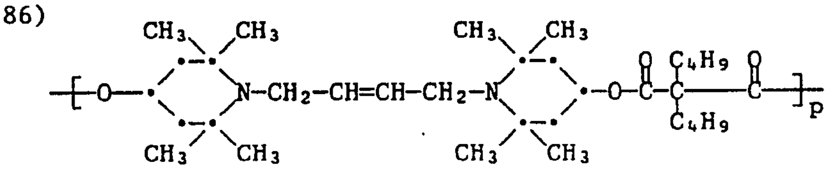

87)

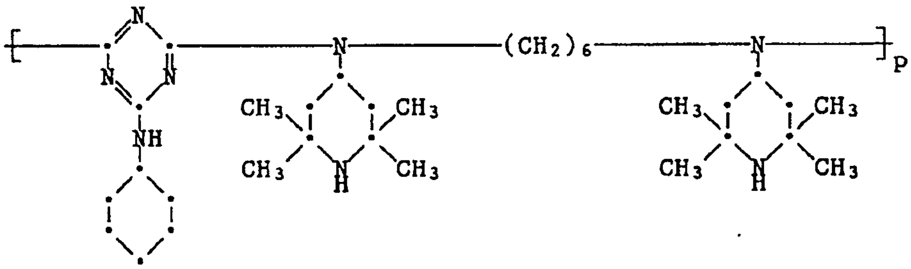

88)

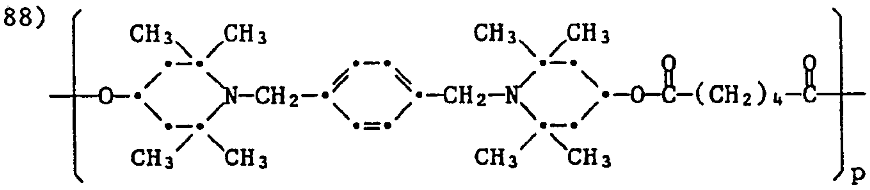

89)

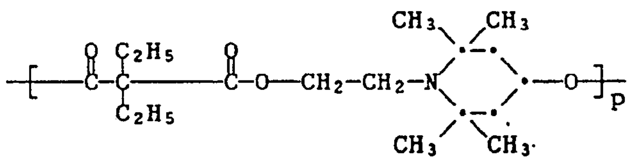

90)

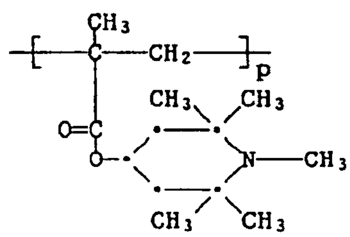

91)

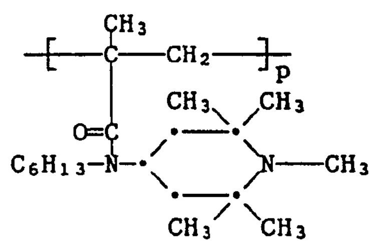

92)

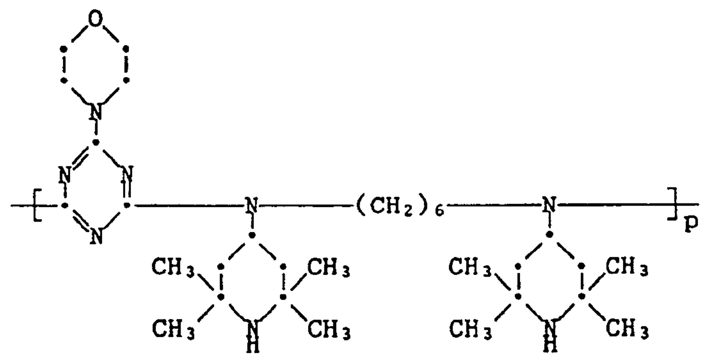

93)

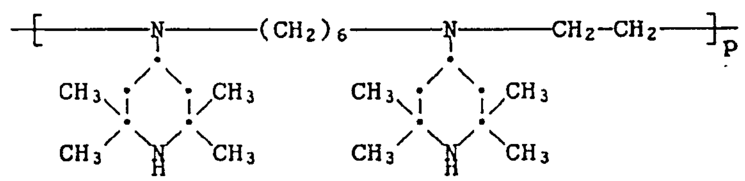

94)

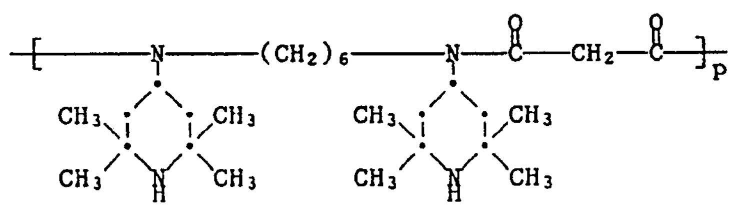

Von diesen Klassen sind die Klassen a), d), e) und f) besonders bevorzugt, insbesondere die Verbindungen 10, 13, 14, 23, 24, 28, 29, 63, 65, 75, 77, 81, 84 und 92.

Diese sterisch gehinderten Amine sind bekannte Verbindungen, viele davon sind kommerziell erhältlich. Es können auch zwei verschiedene sterisch gehinderte Amine verwendet werden, beispielsweise eines von niedrigem und eines von höherem Molekulargewicht, wie dies im US-A-4 692 486 beschrieben ist.

Die als Komponente b) verwendete Zinkverbindung kann eine organische Zinkverbindung sein, z.B. das Zinksalz einer Carbonsäure, Sulfonsäure, Phosphonsäure oder Phosphinsäure oder das Zinksalz eines Phenols oder ein Zinkchelat, wie z.B. das Enolat einer 1,3-Diketoverbindung. Die Komponente b) kann auch eine anorganische Zinkverbindung sein, z.B. ein Oxid, Hydroxid, Carbonat, Phosphat, Phosphit, Sulfat, Chlorid, Fluorid, Tetrafluorborat oder Hypophosphit.

Bevorzugt ist b) das Zinksalz einer $C_1$-$C_{22}$-Carbonsäure, eines $C_6$-$C_{18}$-Phenols oder eines $C_5$-$C_{26}$-1,3-Diketons. Die Carbonsäure kann eine gesättigte oder ungesättigte aliphatische oder cycloaliphatische Carbonsäure sein oder eine aromatische oder aromatisch-aliphatische Carbonsäure sein.

Beispiele hierfür sind Ameisensäure, Essigsäure, Propionsäure, Buttersäure, Capronsäure, 2-Ethylhexansäure, Caprylsäure, Laurinsäure, Myristylsäure, Oenanthsäure, Neodecansäure, Palmitinsäure, Stearinsäure, Isostearinsäure, 12-Hydroxystearinsäure, Ölsäure, Behensäure, Montansäure, Benzoesäure, Chlorbenzoesäure, p-tert. Butylbenzoesäure, p-Dodecylbenzoesäure, Salicylsäure, 3,4-Di-tert.butyl-4-hydroxybenzoesäure, Tolylsäure, Dimethylbenzoesäure, p-Dimethylaminobenzoesäure, Thioglykolsäure, Milchsäure, Abietinsäure, β-Mercaptopropionsäure, β-Dodecylmercaptopropionsäure, Phenylessigsäure oder der Halbester oder das Halbamid eineer Dicarbonsäure. Auch Zinksalze von langkettigen α-Aminocarbonsäuren oder N-Acylaminocarbonsäuren sind hierfür geeignet.

Beispiele für $C_6$-$C_{18}$-Phenole sind Phenol, Kresol, Xylenol, 4-tert. Butylphenol, 4-Nonylphenol, 4-Dodecylphenol, 4-Chlorphenol oder 2-Hydroxydiphenyl.

Beispiele für $C_5$-$C_{26}$-1,3-Diketone sind Acetylaceton, Butanoylaceton, Stearoylaceton, Lauroylaceton, Benzoylaceton, Dibenzoylmethan, Lauroylbenzoylmethan, Benzoyl-6-hydroxyhexanoyl-methan, Stearoyl-benzoylmethan oder Bis(4-methylbenzoyl)-methan.

Bevorzugt ist b) das Zinksalz von Acetylaceton oder von Benzoyl-6-hydroxyhexanoyl-methan.

Bevorzugt ist b) das Zinksalz einer $C_1$-$C_{20}$-Carbonsäure. Es können auch Gemische von Zinkverbindungen verwendet werden, z.B. die Zinksalze technischer Carbonsäuregemische oder technischer Alkylphenolgemische. Das Zink-carboxylat kann auch ein basisches Zink-carboxylat sein. Besonders bevorzugt sind Zinkstearat, Zink-2-ethylhexanoat, Zink-neodecanoat, Zinklaurat und Zinkoleat.

Wenn in den Organozinnverbindungen der Komponente c) Z oder $Z_1$ $C_1$-$C_{20}$-Alkyl bedeuten, so handelt es sich dabei um geradkettige oder verzweigte Alkylgruppen. Beispiele hierfür sind: Methyl, Ethyl, n-Propyl, Isopropyl, n-Butyl, Isobutyl, sec.-Butyl, tert.-Butyl, n-Amyl, Neopentyl, Isoamyl, n-Hexyl, Isohexyl, Heptyl, Octyl, Decyl, Dodecyl, Tetradecyl, Hexadecyl, Octadecyl und Eicosyl.

Wenn $Z_1$ $C_3$-$C_{20}$-Alkenyl bedeutet, so kann dies z.B. 2-Propenyl, 3-Propenyl, 2-Butenyl, 1-Hexenyl, 1-Octenyl, 11-Undecenyl oder Oleyl sein. $Z_1$ als $C_5$-$C_8$-Cycloalkyl ist vorzugsweise Cyclohexyl. $Z_1$ als $C_7$-$C_{18}$-Alkylphenyl ist z.B. p-Tolyl, 2,4-Dimethylphenyl, 4-tert.Butylphenyl, 4-Isopropylphenyl, 4-Hexylphenyl, 4-Nonylphenyl oder 4-Dodecylphenyl. $Z_1$ als $C_7$-$C_9$-Phenyl-alkyl ist vorzugsweise Benzyl oder 2-Phenylethyl.

Z ist vorzugsweise $C_1$-$C_{12}$-Alkyl, insbesondere Methyl, Butyl, Octyl oder Dodecyl. $Z_1$ ist bevorzugt $C_4$-$C_{18}$-Alkyl, Oleyl oder Phenyl.

Der Index m ist bevorzugt 2.

Spezifische Beispiele für die erfindungsgemäss einsetzbaren Organozinnverbindungen sind:

Dibutylzinn-dilaurat, Dioctylzinn-dilaurat, Dimethylzinn-bis-(2-ethylhexanoat), Dibutylzinn-di-isooctadecylat, Butylzinn-trioctanoat, Diphenylzinndilaurat, Dibutylzinn-bis-(isooctylmaleat), Dibutylzinn-dipelargonat, Dibutylzinn-distearat, Dihexylzinn-dioleat, Dioctylzinn-tallat, Dioctylzinn-diundecylenat, Dibutylzinn-bis-(neodecanoat), Dioctylzinn-bis-(neotridecanoat), Dibutylzinn-maleat, Dibutylzinn-bis-(monomethylmaleat), Dihexylzinn-bis-(monohexylmaleat), Dihexylzinn-bis-(mono-isooctylmaleat), Dibutylzinn-bis-(monocetylmaleat), Dibutylzinn-bis-(monooctadecylmaleat), Dibutylzinn-bis-(mono-2-ethoxy-ethylmaleat), Dioctylzinn-bis-(monocylohexylmaleat), Dihexylzinn-bis-(monobenzyl-maleat), Butylhexylzinn-bis-(mono-tert-butylbenzyl-maleat) und Dioctylzinn-maleat.

Bevorzugt ist die Komponente c) eine Verbindung der Formel A, B oder C, insbesondere eine Verbindung der Formel A oder B, worin m 2 ist, vor allem eine Verbindung der Formel A, worin m 2 ist, Z Butyl oder Octyl ist und $Z_1$ $C_8$-$C_{12}$-Alkyl bedeutet.

Die Organozinnverbindungen der Komponente c) sind bekannte Verbindungen und sind als Stabilisatoren für chlorhaltige Polymere bekannt. Einige von ihnen sind im Handel erhältlich. Die Komponente c) kann auch ein Gemisch aus zwei oder mehreren Organozinnverbindungen der Formeln A-D sein. Beispielsweise gibt es Handelsprodukte der Formel A und B, die Gemische mit m = 1 und m = 2 darstellen. Auch Gemische mit verschiedenem Z sind bekannt, die entstehen, wenn zur Veresterung technische Carbonsäuregemische verwendet werden.

Die als Komponente d) verwendbaren 1,3-Dicarbonylverbindungen der Formel E können 1,3-Diketone oder β-Ketocarbonsäureester sein. In der Formel E können $R_1$ und $R_3$ $C_1$-$C_{22}$-Alkyl sein, wie z.B. Methyl, Ethyl, n-Propyl, Isopropyl, n-Butyl, tert.Butyl, Pentyl, Hexyl, Octyl, Decyl, Dodecyl, Octadecyl oder Eicosyl. Bevorzugt als Alkyl sind $R_1$ und $R_3$ $C_1$-$C_{18}$-Alkyl, insbesondere $C_1$-$C_{10}$-Alkyl.

$R_1$ und $R_3$ als $C_5$-$C_{10}$-Hydroxyalkyl stellen insbesondere eine Gruppe

$$-(CH_2)_n-OH$$

dar, worin n 5, 6 oder 7 ist.

$R_1$ und $R_3$ als $C_2$-$C_{18}$-Alkenyl können beispielsweise Vinyl, Allyl, Methallyl, Butenyl, Hexenyl oder Oleyl bedeuten, vorzugsweise Allyl.

$R_1$ und $R_3$ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

$R_1$ und $R_3$ als Phenylalkyl sind insbesondere Benzyl.

$R_1$ und $R_3$ als Cycloalkyl oder Alkyl-cycloalkyl sind insbesondere Cyclohexyl oder Methylcyclohexyl.

$R_2$ als Alkyl kann insbesondere $C_1$-$C_4$-Alkyl sein.

$R_2$ als $C_2$-$C_{12}$-Alkenyl kann insbesondere Allyl sein. $R_2$ als Alkylphenyl ist insbesondere Tolyl.

$R_2$ als Phenylalkyl kann insbesondere Benzyl sein. Bevorzugt ist $R_2$ Wasserstoff.

$R_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein.

$R_5$ als $C_1$-$C_{10}$-Alkylen ist insbesondere $C_2$-$C_4$-Alkylen.

$R_6$ als Alkyl ist insbesondere $C_4$-$C_{12}$-Alkyl, wie z.B. Butyl, Hexyl, Octyl, Decyl oder Dodecyl.

$R_6$ als Alkylphenyl kann insbesondere Tolyl sein.

$R_6$ als Phenylalkyl ist insbesondere Benzyl.

Beispiele für 1,3-Dicarbonylverbindungen der Formel E sind Acetylaceton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Stearoyl-benzoylmethan, 6-Hydroxyhexanoyl-benzoylmethan, Tribenzoylmethan, Bis(4-methylbenzoyl)methan, Benzoyl-p-chlorbenzoylmethan, Bis-(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester und Stearoylessigsäure-ethyl-, -propyl-, -butyl-, -hexyl- oder -octylester.

Bevorzugte Verbindungen der Formel E sind solche, worin $R_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R_2$ Wasserstoff ist und $R_3$ einer der für $R_1$ gegebenen Bedeutungen hat.

Die Verbindungen der Formel E sind bekannte Verbindungen. Viele von ihnen sind im Handel erhältlich.

Die erfindungsgemässen Polymerzusammensetzungen enthalten vorzugsweise auf 100 Gew.-Teile des chlorhaltigen Polymers 0,01 bis 3 Gew.-Teile der Komponente a), 0,01 bis 3 Gew.-Teile der Komponente b), 0,1 bis 5 Gew.-Teile der Komponente c) und 0,01 bis 2 Gew.-Teile der Komponente d). Besonders bevorzugt enthalten 100 Gew.-Teile des chlorhaltigen Polymers 0,1 bis 1 Gew.-Teile der Komponente a), 0,5 bis 2 Gew.-Teile der Komponente b), 1 bis 4 Gew.-Teile der Komponente c) und 0,05 bis 1 Gew.-Zeile der Komponente d).

Darüber hinaus kann die Zusammensetzung weitere Zusätze enthalten, wie sie für die Verarbeitung und Stabilisierung von chlorhaltigen Polymeren bekannt und üblich sind. Dies sind z.B. Weichmacher, Phosphite, Calcium-, Magnesium-, Natrium-, Barium-, Blei- und Cadmiumverbindungen, Hydrotalcite, metallfreie PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Gleitmittel oder Flammschutzmittel.

Beispiele für Weichmacher sind die Ester von Phthalsäure, Adipin-, Azelain-, Sebazin- oder Trimellithsäure, Polyester aus aliphatischen Diolen und Dicarbonsäuren, Phosphorsäureester, Chlorparaffine oder epoxidierte Fettsäureester. Weitere Beispiele mögen dem "Taschenbuch der Kunststoff-Additive", R. Gächter, H. Müller, Hanser-Verlag 1983, Seite 280-307, entnommen werden. Die Weichmacher können in einer Menge von 15 bis 100 Gew.-Teilen, bezogen auf 100 Gew.-Teile des chlorhaltigen Polymeren, verwendet werden.

Organische Phosphite sind bekannte Costabilisatoren für mit Metallstabilisatoren stabilisierte chlorhaltige Polymere, insbesondere in Kombination mit Zink-, Barium- oder Cadmium-Stabilisatoren. Beispiele von solchen Phosphiten sind Trioctyl-, Tridecyl-, Tridodecylphosphit, Decyl-diphenylphosphit, Triphenylphosphit, Phenyl-didecylphosphit, Tris-(nonylphenyl)-phosphit, Trilaurylphosphit, Trioctadecylphosphit, Distearyl-pentaerythritdiphosphit, 2,4-Di-tert.butylphenyl-di(dodecyl)phosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, 3,9-Bis-(2,4-di-tert.butylphenoxy)-2,4,8,10-tetraoxa-3,9-diphosphaspiro[5.5]undecan.

Die Ca-, Mg-, Na-, Ba-, Cd- und Pb-Verbindungen können organische Verbindungen sein, wie z.B. die Metallsalze von Carbonsäuren, Sulfonsäuren, Phosphonsäuren, von Phenolen oder von 1,3-Dicarbonylverbindungen. Sie können auch anorganische Verbindungen sein, wie z.B. die Oxide, Hydroxide, Carbonate, Phosphate, Phosphite oder Hypophosphite dieser Metalle. Bevorzugt sind die Metallcarboxylate wie z.B. die Stearate, Laurate oder Oleate dieser Metalle, sowie die Enolate von 1,3-Dicarbonylverbindungen der Metalle Calcium, Magnesium, Natrium und Barium. Besonders bevorzugt sind die Acetylacetonate von Calcium, Magnesium und Barium.

Eine weitere wichtige Klasse von Metallverbindungen, die in PVC stabilisierend wirken, sind die Hydrotalcite. Diese können natürliche, synthetische oder halbsynthetische (abgewandelte) Hydrotalcite sein. Es handelt sich hierbei um eine besondere Art von basischen Magnesium-Aluminiumcarbonaten, die noch weitere Kationen enthalten können.

Metallfreie Stabilisatoren für chlorhaltige Polymere sind z.B. aliphatische Polyole, wie Pentaerythrit, Dipentaerythrit, Trimethylolpropan, Tris(2-hydroxyethyl)-isocyanurat, Sorbit oder Mannit; Aminocrotonsäureester; Dehydracetsäure; 2,4-Dihydroxybenzophenon; Enolcarbonate, wie sie in EP-A-224 438 beschrieben sind; aromatische Amide, wie Sie in EP-A-122 228 und 174 412 beschrieben sind; sowie Stickstoff-haltige Heterocyclen, wie sie in den EP-A- 2007, 22087, 22749, 41479, 65934, 260 226, 354 179, DE-A-3 048 659, 3 124 853, GB-A-2 170 203 und US-A-4 908 398 beschrieben sind.

Weitere Beispiele von metallhaltigen oder metallfreien Stabilisatoren können dem "Taschenbuch der Kunststoff-Additive" R. Gächter, H. Müller, Hanser-Verlag 1983, Seiten 227-232, entnommen werden.

Schlagzähigkeitsmodifikatoren sind z.B. Polyacrylate, Ethylen-Vinylacetat-Copolymere oder chloriertes Polyethylen. Wärmestandfestigkeitsverbesserer sind z.B. Poly(meth)acrylate, Acrylat-Maleinimid-Copolymere

oder Acrylnitril-Methylstyrol-Copolymere.

Epoxidverbindungen sind ebenfalls bekannte Stabilisatoren für chlorhaltige Polymere. Sie können bei geeigneter Struktur auch gleichzeitig als Weichmacher wirken. Beispiele für Epoxid- Stabilisatoren sind epoxidiertes Polybutadien, epoxidiertes Sojaöl, epoxidiertes Leinsamenöl, epoxidiertes Fischöl, epoxidierter Talg, Methylbutyl- oder 2-Ethylhexylepoxystearat, Tris(epoxyropyl)isocyanurat, epoxidiertes Ricinusöl, epoxidiertes Sonnenblumenöl, epoxidiertes Butyloleat, 3-(2-Phenoxy)-1,2-epoxypropan, Bisphenol-A-diglycidylether, Vinylcyclohexendiepoxyd, Dicyclopentadiendiepoxyd oder 3,4-Epoxycyclohexylmethyl-3,4-epoxycyclohexancarboxylat.

Beispiele für Antioxidantien sind:

1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.-butyl-4'-hydroxyphenyl)-butyrat],
Bis-(3-tert.butyl-4-hydroxy-5-methylphenyl)-dicyclopentadien, Bis-[2-(3'-tert.butyl-2'-hydroxy-5'-methylbenzyl)-6-tert.butyl-4-methyl-phenyl]-terephthalat.

5. Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

6. Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

Beispiele für UV-Absorber und Lichtschutzmittel sind:

1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin.

5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyloxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

Die verwendeten Pigmente können anorganische oder organische Pigmente sein, sie können auch metallische Pigmente sein. Füllstoffe sind z.B. Kreide, Russ, Graphit, Talk, Kaolin oder silikatische Mineralien.

Gleitmittel sind vor allem Fettsäuren und ihre Salze, Ester und Amide, Fettalkohole, Paraffine und Polyethylenwachse. Flammschutzmittel sind vor allem Antimonoxid, aromatische Bromverbindungen und Phosphorsäureester.

Eine Uebersicht über die Verwendung von Schlagzähigkeitsmodifkatoren, Farbmitteln, Füllstoffen, Gleitmitteln und Flammschutzmitteln in chlorhaltigen Polymeren, speziell in PVC, findet sich im "Taschenbuch der Kunststoff-Additive", R. Gächter, H. Müller, Hanser-Verlag 1983.

Die erfindungsgemässen Zusammensetzungen können auf an sich bekannte Weise hergestellt werden. In der Regel wird das Stabilisatorsystem in das Polymer eingearbeitet, wozu eine Reihe von bekannten Vorrichtungen, wie Kalander, Mischer, Kneter, Extruder und dergleichen, existieren.

Die nach vorliegender Erfindung stabilisierten Zusammensetzungen können auf bekannte Weisen in die gewünschte Form gebracht werden. Solche Verfahren sind beispielsweise Kalandrieren, Extrudierten, Spritzgiessen, Sintern oder Spinnen, ferner Extrusions-Blasen oder eine Verarbeitung nach dem Plastisol-Verfahren.

Die erfindungsgemässen Zusammensetzungen eignen sich insbesondere in Form von Hart-Rezepturen für Hohlkörper (Flaschen), Verpackungsfolien (Tiefziehfolien), Blasfolien, Crash pad-Folien (Automobile), Rohre, Schwerprofile (Fensterrahmen), Lichtwandprofile, Bauprofile, Sidings, Fittings, Bürofolien und Apparatur-Gehäuse (Computer, Haushaltgeräte).

Andere Zusammensetzungen in Form von Weich-Rezepturen sind für Drahtummantelungen, Kabelisolierungen, Dekorationsfolien, Dachfolien, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Die nachfolgenden Beispiele erläutern die Erfindung näher. Alle Angaben in Teilen und Prozenten beziehen sich auf das Gewicht, sofern nicht anders angegeben.

Beispiele 1-15:

Verschiedene PVC-Zusammensetzungen werden durch Vermischen der einzelnen Komponenten gemäss nachfolgender Tabelle I hergestellt (Zahlenangaben bedeuten Gew.-Teile).

Der Hitzetest wird derart ausgeführt, dass die PVC-Zusammensetzung bei 180°C auf einem Mischwalzwerk während 5 Minuten gewalzt wird. Vom gebildeten etwa 0,3 mm dicken Walzfell werden Folienmuster in einem Testofen (®Mathis Thermotaker Typ LTF- ST) bei 180°C thermisch belastet. Nach den in nachfolgender Tabelle II angegebenen Zeitintervallen wird jeweils an einem Prüfmuster der Yellowness-Index (YI) nach ASTM D 1925-70 bestimmt (hohe YI-Werte bedeuten starke Verfärbung und damit geringe Stabilität).

Tabelle 1:

| Beispiel | 1 | 2 | 3 | 4 | 5 | 6 | 7 | 8 | 9 |
|---|---|---|---|---|---|---|---|---|---|
| Suspensionspolymerisat mit K-Wert 64 | 100 | 100 | 100 | 100 | 100 | 100 | 100 | 100 | 100 |
| Dioctylphthalat | 20 | 20 | 20 | 20 | 20 | 20 | 20 | 20 | 20 |
| Dibutylzinn-dilaurat | 1,5 | 1,5 | 1,5 | 1,5 | 1,5 | 1,5 | 1,5 | 1,5 | 1,5 |
| Benzoyl-stearoylmethan | 0,3 | | | | | 0,3 | 0,3 | 0,3 | 0,3 |
| Ph-CO-$CH_2$CO($CH_2$)$_5$-OH | | 0,3 | | | | | | | |
| Sterisch gehindertes Amin*) (1) | 0,3 | 0,3 | | | | | | 0,3 | 0,3 |
| (2) | | | 0,3 | 0,3 | 0,3 | 0,3 | 0,3 | | |
| (3) | | | | | | | | | |
| Zn-Neodecanoat | 0,35 | 0,35 | 0,3 | 0,35 | 0,4 | 0,3 | 0,35 | 0,16 | 0,16 |
| epoxidiertes Sojaöl | 1,0 | 1,0 | | | | | | | |

Tabelle 1: (Fortsetzung)

| Beispiel | 10 | 11 | 12 | 13 | 14 | 15 |
|---|---|---|---|---|---|---|
| Suspensionspolymerisat mit K-Wert 64 | 100 | 100 | 100 | 100 | 100 | 100 |
| Dioctylphthalat | 20 | 20 | 20 | 20 | 20 | 20 |
| Dibutylzinn-dilaurat | 1,5 | 1,5 | 1,5 | 1,5 | 1,5 | 1,5 |
| Benzoyl-stearoylmethan | 0,3 | 0,3 | | 0,3 | 0,3 | 0,3 |
| Ph-CO-$CH_2$CO($CH_2$)$_5$-OH | | | | | | |
| Sterisch gehindertes Amin*) (1) | 0,3 | 0,3 | | | | 0,3 |
| (2) | | | 0,3 | 0,3 | | |
| (3) | | | | | 0,3 | |
| (4) | | | | 0,3 | 0,3 | |
| Zn-Neodecanoat | 0,24 | 0,24 | 0,35 | 0,7 | 0,7 | 0,24 |
| Pentaerythrit/Dipentaerythrit-Gemisch | | 0,1 | | | | |

*) Die in den Beispielen 1 bis 15 erwähnten sterisch gehinderten Amine haben, entsprechend der jeweiligen Bezugsnummer, die nachfolgend aufgeführte Bedeutung

Tabelle 2: Yellowness Index (YI) nach ASTM D 1925-70

| Zeit / Beispiel | 5 | 10 | 15 | 20 | 25 | 30 | 35 min |
|---|---|---|---|---|---|---|---|
| 1 | 11,1 | 11,9 | 13,5 | 15,3 | 17,7 | 20,3 | 23,3 |
| 2 | 7,6 | 9,0 | 9,9 | 11,6 | 13,7 | 16,3 | 20,0 |
| 3 | 3,2 | 5,8 | 7,8 | 13,4 | 20,0 | 32,6 | 52,6 |
| 4 | 4,8 | 4,5 | 10,9 | 16,3 | 25,1 | 45,2 | 63,7 |
| 5 | 3,5 | 5,1 | 7,8 | 12,9 | 21,2 | 36,0 | 50,4 |
| 6 | 2,1 | 2,7 | 3,1 | 4,2 | 7,4 | 13,7 | 25,8 |
| 7 | 2,4 | 2,4 | 2,3 | 2,4 | 6,4 | 10,7 | 18,9 |
| 8 | 10,2 | 11,2 | 14,1 | 16,7 | 19,7 | | |
| 9 | 8,8 | 10,3 | 12,3 | 14,9 | 17,4 | | |
| 10 | 9,3 | 10,4 | 12,8 | 15,6 | 18,8 | | |
| 11 | 7,7 | 9,6 | 9,7 | 11,1 | 13,4 | | |
| 12 | 11,3 | 15,3 | 23,1 | 37,0 | 59,4 | | |
| 13 | 6,6 | 7,4 | 8,6 | 9,1 | 10,8 | 13,6 | 16,2 |
| 14 | 5,5 | 6,7 | 7,8 | 9,4 | 11,7 | 13,6 | 17,0 |
| 15 | 9,1 | 10,3 | 11,4 | 13,4 | 15,0 | 18,0 | 22,6 |

(1)

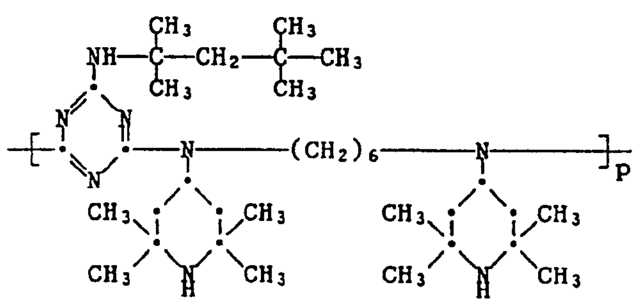

$\bar{M}n \approx 2500$

(2)

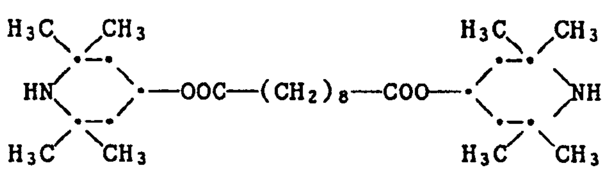

③

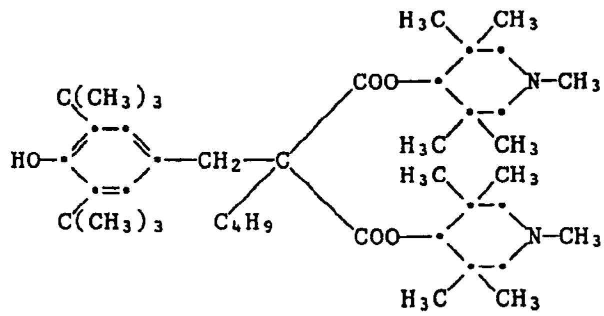

④

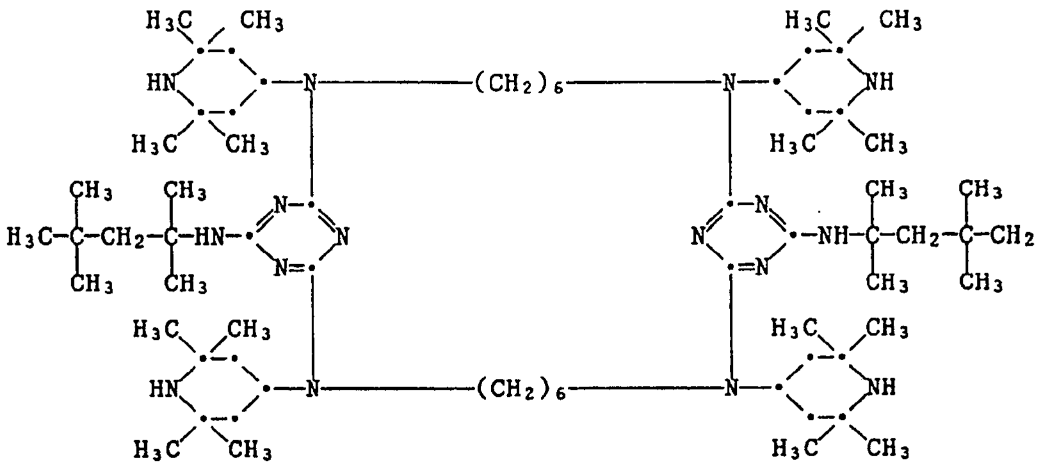

Beispiel 16:

Weichmacher-freie PVC-Folien werden hergestellt durch Mischen von 100 Teilen PVC vom K-Wert 64, 1,5 Teilen Dibutylzinndilaurat, 0,3 Teilen des sterisch gehinderten Amins①, und den in Tabelle 3 angegebenen Costabilisatoren.

Die Herstellung und Prüfung der Folien geschieht wie in Beispiel 1 angegeben. Tabelle 3 zeigt den Yellowness-Index nach thermischer Belastung bei 180°C.

Tabelle 3:

| Costabilisatoren*) | Yellowness-Index nach 10 | 20 | 30 | 40 | 50 min |
|---|---|---|---|---|---|
| keiner | 34 | 94 | >100 | | |
| 0,3 Zn-neodecanoat | 23 | 40 | 53 | 65 | 90 |
| 0,3 Zn-neodecanoat + 0,3 Benzoyl-stearoylmethan | 9 | 13 | 19 | 28 | 43 |

*) Teile auf 100 Teile PVC

## Patentansprüche

1. Stabilisierte chlorhaltige Polymerzusammensetzung, enthaltend ein chlorhaltiges Polymer und ein Stabilisatorgemisch, enthaltend:
   a) mindestens ein sterisch gehindertes Amin,
   b) mindestens eine organische oder anorganische Zinkverbindung,
   c) mindestens eine Organozinnverbindung der Formeln A, B, C oder/und D,

   $(Z)_mSn(OOC\text{-}Z_1)_{4\text{-}m}$ A

   $(Z)_mSn(OOC\text{-}CH{=}CH)COOZ_1)_{4\text{-}m}$ B

   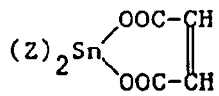
   C

   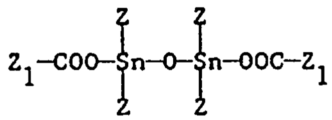
   D

   worin m 1, 2 oder 3 bedeutet, Z $C_1$-$C_{20}$-Alkyl bedeutet, $Z_1$ Wasserstoff, $C_1$-$C_{20}$-Alkyl, $C_3$-$C_{20}$-Alkenyl, $C_5$-$C_8$-Cycloalkyl, Phenyl, $C_7$-$C_{18}$-Alkylphenyl oder $C_7$-$C_9$-Phenylalkyl bedeutet, und
   d) mindestens eine 1,3-Dicarbonylverbindung der Formel E

   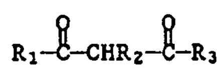
   E

   worin $R_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe $-R_5-S-R_6$ oder $-R_5\text{-}O\text{-}R_6$ bedeutet, $R_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Grupe $-CO-R_4$ bedeutet, $R_3$ eine der für $R_1$ gegebenen Bedeutungen hat oder $C_1$-$C_{18}$-Alkoxy bedeutet,
   $R_4$ $C_1$-$C_4$-Alkyl oder Phenyl bedeutet,
   $R_5$ $C_1$-$C_{10}$-Alkylen bedeutet und
   $R_6$ $C_1$-$C_{12}$-Alkyl, Phenyl, $C_7$-$C_{18}$-Alkylphenyl oder $C_7$-$C_{10}$-Phenylalkyl bedeutet.

2. Polymerzusammensetzung gemäss Anspruch 1, dadurch gekennzeichnet, dass die Komponente a) ein Polyvinylchlorid oder ein mindestens 80 % Vinylchlorid enthaltendes Copolymer oder eine Mischung (Polyblend) eines solchen Polymers mit anderen chlorhaltigen oder chlorfreien Polymeren ist.

3. Polymerzusammensetzung gemäss Anspruch 1 enthaltend als Komponente a) mindestens eine Verbindung aus der Reihe der Polyalkylpiperidinderivate, die mindestens eine Gruppe der Formel I

   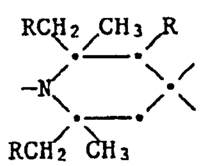
   I

   worin R Wasserstoff oder Methyl ist, enthält.

4. Polymerzusammensetzung gemäss Anspruch 3, worin R in Formel I Wasserstoff ist.

5. Polymerzusammensetzung gemäss Anspruch 3, dadurch gekennzeichnet, dass die Komponente b) ein Polyalkylpiperidinderivat der Formel II ist,

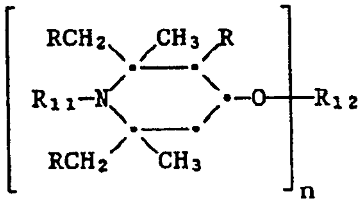

II

worin R Wasserstoff ist, $R_{11}$ Wasserstoff oder Methyl ist, n 2 ist und $R_{12}$ der Diacylrest einer aliphatischen Dicarbonsäure mit 4-12 C-Atomen ist.

6. Polymerzusammensetzung gemäss Anspruch 3, enthaltend als Polyalkylpiperidinderivat die Verbindung der Formel

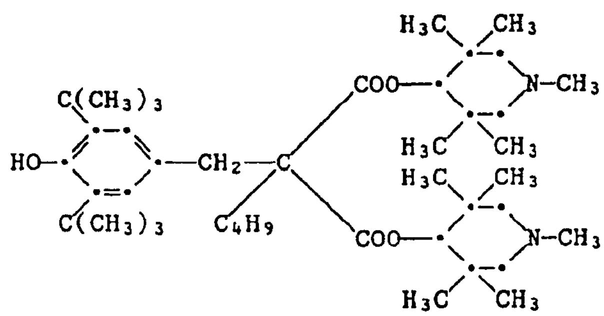

7. Polymerzusammensetzung gemäss Anspruch 3, enthaltend als Polyalkylpiperidinverbindung eine der Verbindungen der Formeln

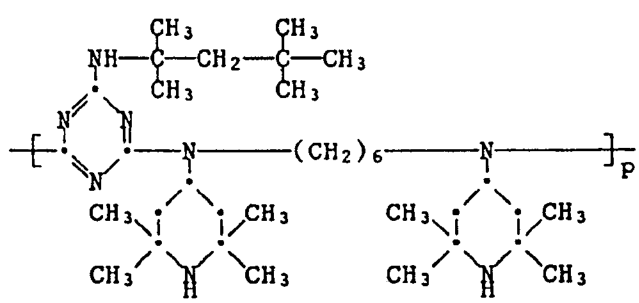

worin p ein Wert von 2 bis 20 ist, oder

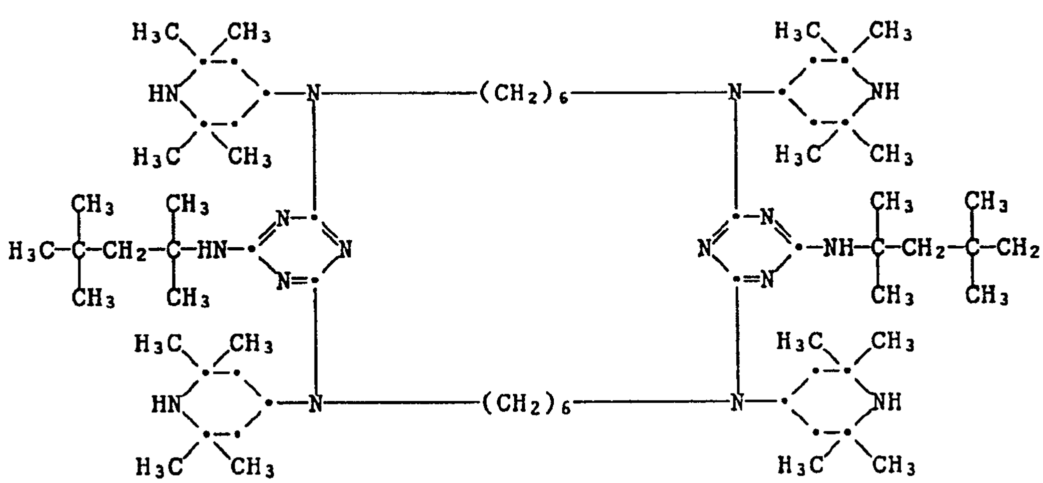

8. Polymerzusammensetzung gemäss Anspruch 1, dadurch gekennzeichnet, dass die Komponente b) das

Zinksalz einer $C_1$-$C_{22}$-Carbonsäure, eines $C_6$-$C_{18}$-Phenols oder eines $C_5$-$C_{26}$-1,3-Diketons ist.

**9.** Polymerzusammensetzung gemäss Anspruch 1, dadurch gekennzeichnet, dass die Komponente c) eine Verbindung der Formel A bis D ist, worin Z $C_1$-$C_{12}$-Alkyl und $Z_1$ $C_4$-$C_{18}$-Alkyl, Oleyl oder Phenyl bedeuten.

**10.** Polymerzusammensetzung gemäss Anspruch 9, dadurch gekennzeichnet, dass die Komponente c) eine Verbindung der Formel A ist, worin m 2 ist, Z Butyl oder Octyl ist und $Z_1$ $C_8$-$C_{12}$-Alkyl bedeutet.

**11.** Polymerzusammensetzung gemäss Anspruch 1, enthaltend auf 100 Gew.-Teile des chlorhaltigen Polymers 0,01 bis 3 Gew.-Teile der Komponente a), 0,01 bis 3 Gew.-Teile der Komponente b), 0,1 bis 5 Gew.-Teile der Komponente c) und 0,01 bis 2 Gew.-Teile der Komponente d).

**12.** Polymerzusammensetzung gemäss Anspruch 1, enthaltend ausser den Komponenten (a) bis (d) einen oder mehrere Zusatzstoffe aus der Reihe der Weichmacher, Phosphite, Calcium-, Magnesium-, Natrium-, Barium-, Blei- und Cadmiumverbindungen, Hydrotalcite, metallfreien PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Gleitmittel und Flammschutzmittel.